# EUROPEAN PATENT SPECIFICATION

(11) **EP 4 283 259 B1**
(45) Date of publication and mention of the grant of the patent: **03.12.2025**
(21) Application number: 22742590.7
(22) Date of filing: 19.01.2022
(51) Int. Cl.: G01C 21/36, G01C 21/26, G08G 1/0969, G09B 29/00

(54) **MAP DISPLAY SYSTEM**
KARTENANZEIGESYSTEM
SYSTÈME D'AFFICHAGE DE CARTE

(30) Priority: 20.01.2021 JP 2021006836
(43) Date of publication of application: 29.11.2023
(73) Proprietor: AISIN CORPORATION, Kariya-shi, Aichi 448-8650 (JP); TOYOTA JIDOSHA KABUSHIKI KAISHA, Toyota-shi Aichi 471-8571 (JP)
(72) Inventor: NISHIMURA Natsuki, Kariya-shi, Aichi 448-8650 (JP); HASTIR Sebastien, Kariya-shi, Aichi 448-8650 (JP); RENQUIN Emmanuel, Kariya-shi, Aichi 448-8650 (JP); PIRLET Olivier, Kariya-shi, Aichi 448-8650 (JP); PRONNIER Emmanuel, Kariya-shi, Aichi 448-8650 (JP); NISHIKAWA Tatsuya, Kariya-shi, Aichi 448-8650 (JP); NAKAMURA Taiki, Toyota-shi, Aichi 471-8571 (JP)
(74) Representative: TBK
(86) International application number: PCT/JP2022/001709
(87) International publication number: WO 2022/158468

(56) References cited:
- EP-B1- 2 223 045
- JP-A- 2007 108 119
- JP-A- 2009 086 993
- JP-A- 2009 092 559
- JP-A- 2009 168 713
- JP-A- 2009 168 713
- US-A1- 2021 010 824

## Description

### TECHNICAL FIELD

The present invention relates to a map display system.

### BACKGROUND ART

Conventionally, there is known a technique for providing guidance on parking spaces on streets (on-street parking spaces). For example, JP 2009-162568 A discloses an example in which guidance on parking spaces on streets is provided using rectangles that extend along the streets displayed on a map.

Furthermore, US 2021/010824 A1 discloses a method of determining a parking route for a vehicle, which comprises obtaining a destination location within a geographic area, determining a sub-network comprising a subset of segments of an electronic map that are representative of roads within a predetermined walking time or distance of the destination location, associating, at least for the segments of the sub-network representing roads having at least one associated parking space, data indicative of a walking time or distance from the segment to the destination location, exploring, using a search algorithm having an associated cost function, the segments of the sub-network from an origin location to identify a plurality of candidate parking routes. Said exploring comprises determining a cost for each of the plurality of candidate parking routes.

### SUMMARY OF INVENTION

### TECHNICAL PROBLEMS

In a navigation system, etc., various types of guidance is often provided on a map. For example, traffic information such as information indicating traffic congestion levels is often displayed along roads displayed on a map. The traffic information and information indicating parking spaces on streets are both information about roads. Thus, if those pieces of information are always simultaneously displayed, then there is too much information, which may make it difficult to obtain information required by a user.

The present invention is made in view of the above-described problem, and it is an object thereof to provide a technique that can prevent too much information from being displayed.

### SOLUTIONS TO PROBLEMS

According to the invention, the above object is achieved by a map display system according to claim 1. Further features and advantageous modifications are shown in the dependent claims.

To provide the above-described technique, a map display system includes: a current location obtaining part that obtains a current location of a vehicle; a destination obtaining part that obtains a destination of the vehicle; a map information obtaining part that obtains map information; a map display part that displays, based on the current location and the map information, a map including the current location and a traffic congestion icon on a display part, the traffic congestion icon indicating traffic congestion information of a road; and a display control part that performs deletion of the traffic congestion icon and display of an on-street parking space icon on the map, when a distance between the current location and the destination reaches less than or equal to a first threshold value, the on-street parking space icon indicating a parking space on a street. When the distance between the current location and the destination reaches less than or equal to a first threshold value, the display control part displays, on the display part, an input part for inputting an instruction to switch between the traffic congestion icon and the on-street parking space icon, and the deletion of the traffic congestion icon and the display of the on-street parking space icon are performed when an instruction to switch the traffic congestion icon to the on-street parking space icon is provided through the input part.

Namely, the possibility of using an on-street parking space is higher when the vehicle is present around a destination than when the vehicle is present in a region far from the destination. Hence, in the map display system, when the distance between a current location and the destination is farther than the first threshold value, traffic congestion icons are displayed on a map. On the other hand, in the map display system, when the distance between the current location and the destination is less than or equal to the first threshold value, the traffic congestion icons are deleted and on-street parking space icons are displayed on the map. Hence, the traffic congestion icons and the on-street parking space icons do not exist simultaneously, by which too much information can be prevented from being displayed.

### BRIEF DESCRIPTION OF DRAWINGS

FIG. 1 is a block diagram of a navigation system including a map display system.
FIG. 2 is a flowchart of a map display process.
FIGS. 3A and 3B are diagrams showing exemplary display of a map.
FIGS. 4A and 4B are diagrams showing exemplary display of a map.

### DESCRIPTION OF EMBODIMENTS

Here, an embodiment of the present invention will be described in accordance with the following order:
(1) Configuration of a navigation system;
(2) Map display process; and
(3) Other embodiments.

### (1) Configuration of a navigation system:

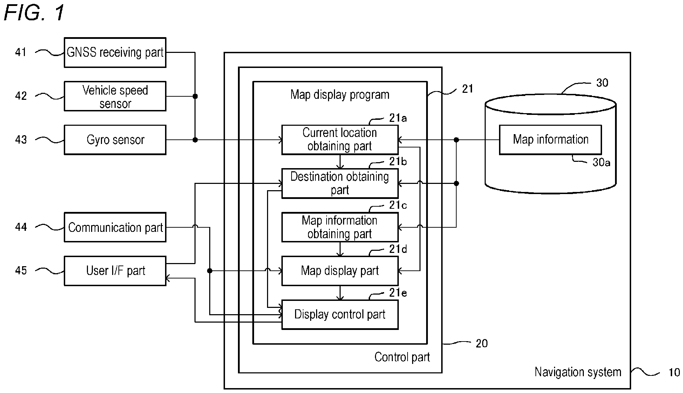

FIG. 1 is a block diagram showing a configuration of a navigation system 10 including a map display system according to one embodiment of the present invention. The navigation system 10 is provided in a vehicle, and includes a control part 20 including a CPU, a RAM, a ROM, etc., and a recording medium 30. The navigation system 10 can execute, by the control part 20, programs stored in the recording medium 30 or the ROM. The recording medium 30 has map information 30a recorded therein in advance.

The map information 30a is information used to identify the location of the vehicle and a facility which is a guidance target, and includes node data representing the location of a node set on a road on which the vehicle travels, etc.; shape interpolation point data representing the location of a shape interpolation point for identifying the shape of a road between nodes, etc.; link data representing a link between nodes; data representing the location of a ground object present on a road or around the road, etc.; and the like.

In addition, in the present embodiment, link data is associated with information indicating a road type of a road section (a section having an intersection as its endpoint) indicated by the link data. The road types can be defined in various manners. In the present embodiment, the road types are classified by the size of roads. Namely, in the present embodiment, the road types are classified into expressways, general roads, and narrow streets. Needless to say, these road types are an example, and the general roads may be further classified into national highways, prefectural highways, etc., or other classification may be employed.

The vehicle of the present embodiment includes a GNSS receiving part 41, a vehicle speed sensor 42, a gyro sensor 43, a communication part 44, and a user I/F part 45. The GNSS receiving part 41 is a device that receives Global Navigation Satellite System signals, and receives radio waves from navigation satellites and outputs a signal for calculating a current location of the vehicle through an interface which is not shown. The control part 20 obtains the signal and thereby obtains a current location of the vehicle. The vehicle speed sensor 42 outputs a signal corresponding to the rotational speed of wheels provided in the vehicle. The control part 20 obtains the signal through an interface which is not shown, and thereby obtains vehicle speed. The gyro sensor 43 detects angular acceleration of the vehicle for a turn in a horizontal plane, and outputs a signal corresponding to the orientation of the vehicle. The control part 20 obtains the signal and thereby obtains a traveling direction of the vehicle. The vehicle speed sensor 42, the gyro sensor 43, and the like, are used to identify a travel path of the vehicle. In the present embodiment, a current location is identified based on the point of departure and travel path of the vehicle, and the current location of the vehicle identified based on the point of departure and the travel path is corrected based on an output signal from the GNSS receiving part 41.

The communication part 44 is a device for performing radio communication with an information management system which is not shown. Namely, the control part 20 performs communication with the information management system at any timing by controlling the communication part 44, and can thereby obtain traffic congestion information indicating a current traffic congestion level for each road section. Note that in the present embodiment, the traffic congestion level corresponds to average speed on a road section, and the lower the average speed, the heavier the traffic congestion. The traffic congestion level may be defined in various manners. In the present embodiment, the traffic congestion level is defined in a plurality of levels, "jam", "busy", and "clear", in increasing order of the average speed.

In addition, the control part 20 performs communication with the information management system at any timing by controlling the communication part 44, and can thereby obtain on-street parking space information indicating, for each road section, whether there is a parking space on a street, and a current occupancy level. Note that in the present embodiment, the occupancy level corresponds to the occupancy of a parking space on a street present on a road section. The occupancy level may be defined in various manners. In the present embodiment, the occupancy level is defined in a plurality of levels, "occupied" and "vacant", in decreasing order of the occupancy.

Note that on-street parking space information may be associated with link data included in the map information 30a. In this case, the on-street parking space information is configured to be information indicating whether there is a parking space on a street. The occupancy level may be obtained from the information management system or may be estimated based on statistical occupancy. In addition, a configuration may be adopted in which whether there is a parking space on a street is defined, but the degree of occupancy of an on-street parking space is not defined. Furthermore, a system that manages traffic congestion information and on-street parking space information may be different systems, and each piece of information may be obtained from a system that manages the piece of information.

The user I/F part 45 is an interface part for accepting, as input, instructions from a driver and providing various types of information to the driver, and includes a touch panel display, switches, etc., a speaker, etc., which are not shown. Namely, the user I/F part 45 includes an image display part, an audio output part, and a user's instruction input part.

By a function of a navigation program which is not shown, the control part 20 accepts driver's input of a destination through the input part of the user I/F part 45, and searches for a planned travel route from a current location of the vehicle to the destination. In addition, by a function of the navigation program, the control part 20 can provide the driver of the vehicle with route guidance that instructs the driver on the planned travel route. Furthermore, in the present embodiment, as a function of the navigation program, a function of displaying a map on the display of the user I/F part 45 can be performed, and the map display is implemented by a map display program 21.

When the map display program 21 is executed, the control part 20 functions as a current location obtaining part 21a, a destination obtaining part 21b, a map information obtaining part 21c, a map display part 21d, and a display control part 21e. The current location obtaining part 21a functions to obtain a current location of the vehicle. By the function of the current location obtaining part 21a, the control part 20 obtains a current location of the vehicle based on output information from the GNSS receiving part 41, the vehicle speed sensor 42, and the gyro sensor 43.

The destination obtaining part 21b functions to obtain a destination of the vehicle. In the present embodiment, the user inputs a destination upon performing route guidance, and thus, the control part 20 also uses, in display control of on-street parking space icons, a destination inputted in the process of identifying a guidance target in the route guidance. Hence, by the function of the destination obtaining part 21b, the control part 20 accepts user's input of a destination through the input part of the user I/F part 45. Upon the acceptance of user's input of a destination, the control part 20 searches for a planned travel route from the current location of the vehicle to the destination. The search may be performed by various techniques. For example, costs are associated with road sections represented by the link data included in the map information 30a and, for example, an algorithm is used that performs a route search so as to obtain a minimum sum of costs of road sections included in a route from a point of departure to the destination. When a planned travel route is searched and travel of the vehicle starts, the control part 20 controls the user I/F part 45 to show the planned travel route on a map displayed on the display part and to output, from the output part, voice instructing the user on a traveling direction, before an intersection where the vehicle travels in a direction other than a straight-ahead direction.

The map information obtaining part 21c functions to obtain map information. The control part 20 obtains, from the map information 30a, information for displaying a map including the current location on a predetermined scale on the display part of the user I/F part 45.

The map display part 21d functions to display, based on the current location and the map information, a map including the current location and traffic congestion icons indicating traffic congestion information of roads on the display part. Namely, the control part 20 renders an image of a map including the current location, based on the map information 30a obtained by the map information obtaining part 21c, and controls the user I/F part 45 to display the map on the display part.

Furthermore, the control part 20 performs communication with the information management system which is not shown through the communication part 44 to specify identification information (link IDs) of road sections included in the map displayed on the display part, and allow the information management system to transmit traffic congestion information of each road section. When the control part 20 receives the pieces of traffic congestion information, the control part 20 displays traffic congestion icons indicating the pieces of traffic congestion information such that the traffic congestion icons are associated with their corresponding road sections. In the present embodiment, the traffic congestion icons are lines shown along with roads. In addition, in the present embodiment, the traffic congestion information indicates three traffic congestion levels: jam, busy, and clear. The traffic congestion icons are configured to indicate traffic congestion levels. Specifically, the control part 20 renders, at a location off a road by a predetermined distance, a line parallel to the road and colors the line based on the traffic congestion level. The coloring is performed, for example, such that the worse the traffic congestion, the more intense the coloring. It is possible to adopt, for example, a configuration in which "jam" is colored red, "busy" is colored orange, and "clear" is colored green.

The display control part 21e functions to perform deletion of the traffic congestion icons and display of on-street parking space icons indicating parking spaces on streets on the map, when the distance between the current location and the destination reaches less than or equal to a first threshold value. Note, however, that in the present embodiment, the user is inquired whether to perform switching from display of traffic congestion icons to display of on-street parking space icons. Namely, in the present embodiment, traffic congestion icons are displayed on a map by default, but when the current location approaches the destination, display of the traffic congestion icons can be switched to display of on-street parking space icons by user's selection.

To enable such switching, when the distance between the current location and the destination reaches less than or equal to the first threshold value, by the function of the display control part 21e, the control part 20 displays, on the display part, an input part for inputting an instruction to switch between traffic congestion icons and on-street parking space icons. Specifically, the control part 20 obtains a distance between the current location and the destination by referring to the map information 30a, and determines whether the distance is less than or equal to the predetermined first threshold value.

Note that the first threshold value is, for example, a value defined in advance as the value of a distance at which the user starts to consider, before the destination, which on-street parking space the vehicle is to be parked in. In the present embodiment, the first threshold value is set to 2 km. Note that the distance between the current location and the destination may be a straight-line distance or may be a distance along a route.

When the distance between the current location and the destination is less than or equal to the first threshold value, the control part 20 controls the user I/F part 45 to display an input part for inputting an instruction to switch between traffic congestion icons and on-street parking space icons. In the present embodiment, the display part of the user I/F part 45 is a touch panel, and thus, the control part 20 can determine whether a switching instruction through the input part has been performed, by detecting a touch operation on the input part. The input part may have various modes, but in the present embodiment, each time the input part is touched, an instruction to switch traffic congestion icons to on-street parking space icons and an instruction to switch on-street parking space icons to traffic congestion icons can be inputted.

When an instruction to switch traffic congestion icons to on-street parking space icons is performed through the input part with the traffic congestion icons being displayed on a map, the control part 20 deletes the traffic congestion icons from the map. In addition, the control part 20 displays on-street parking space icons on the map. Specifically, the control part 20 identifies road sections present in an area in which the distance from a reference point on a map being displayed (in the present embodiment, a point at the center of the map displayed) is less than or equal to a second threshold value, by referring to the map information 30a. Note that the second threshold value is a distance set for extracting, as candidates, parking spaces that can be selected by the user from within the map being displayed. In the present embodiment, the first threshold value is a larger value than the second threshold value. In addition, the distance from the reference point on the map being displayed may be a straight-line distance or may be a distance along a route.

The control part 20 performs communication with the information management system which is not shown through the communication part 44 to specify identification information (link IDs) of the road sections present in the area in which the distance from the reference point on the map being displayed is less than or equal to the second threshold value, and allow the information management system to transmit information indicating the locations of on-street parking spaces present on the specified road sections and occupancy information of each on-street parking space.

When the control part 20 receives the information indicating the locations of on-street parking spaces and the occupancy information of each on-street parking space, the control part 20 displays, based on the locations of on-street parking spaces, on-street parking space icons indicating on-street parking spaces included in the map such that the on-street parking space icons are associated with their corresponding road sections. In the present embodiment, the on-street parking space icons are also lines shown along with roads. In addition, in the present embodiment, the occupancy information of on-street parking spaces indicates two occupancy levels: occupied and vacant. The on-street parking space icons are configured to indicate occupancy levels. Specifically, the control part 20 renders, at a location off a road by a predetermined distance, a line parallel to the road and colors the line based on the occupancy level. The coloring is performed, for example, such that the degree of occupancy can be seen. It is possible to adopt, for example, a configuration in which "vacant" is colored blue and "occupied" is colored light blue.

When an instruction to switch on-street parking space icons to traffic congestion icons is performed through the input part with the on-street parking space icons being displayed on a map, the control part 20 deletes the on-street parking space icons from the map. In addition, the control part 20 displays traffic congestion icons on the map.

In the present embodiment described above, either traffic congestion icons or on-street parking space icons are displayed on a map. Thus, it is possible to prevent too much information from being displayed on the map. Furthermore, in the present embodiment, by user's input on the input part, an instruction to switch from traffic congestion icons to on-street parking space icons can be provided. Thus, on-street parking space icons can be displayed as required by the user. Note that it is also possible for the user to provide an instruction to switch on-street parking space icons to traffic congestion icons by using the input part according to the present embodiment. Thus, it is also possible to display traffic congestion icons as required by the user.

Furthermore, in the present embodiment, traffic congestion icons are displayed until the vehicle approaches a destination. On the other hand, when the distance between a current location and the destination reaches less than or equal to the first threshold value, the system goes into a state of being able to display on-street parking space icons in response to an instruction provided through the input part. Thus, on-street parking space icons are not displayed during a period with a low likelihood of using an on-street parking space, by which too much information can be prevented from being presented. In addition, of on-street parking space icons and traffic congestion icons, icons that are more likely to be required by the user can be displayed.

Furthermore, in the present embodiment, both traffic congestion icons and on-street parking space icons are represented by lines shown along roads. Although these icons can differ from each other in length and display location and differ from each other in color, the lines have the same thickness. Thus, traffic congestion icons and on-street parking space icons are represented by lines having the same form.

Thus, if both traffic congestion icons and on-street parking space icons are displayed on a map, then there is too much information, which can make it difficult for the user to identify the icons and recognize information indicated by the icons during driving. However, in the present embodiment, either traffic congestion icons or on-street parking space icons are displayed, and thus, even if icons of the same form are used, there is no need to distinguish between traffic congestion icons and on-street parking space icons to recognize which information is displayed. Thus, it becomes easier to understand information of icons.

Furthermore, in the present embodiment, the first threshold value is larger than the second threshold value. Thus, the user can start selecting an on-street parking space present around a reference point on a map being displayed, before a current location of the vehicle comes too near to a destination.

### (2) Map display process:

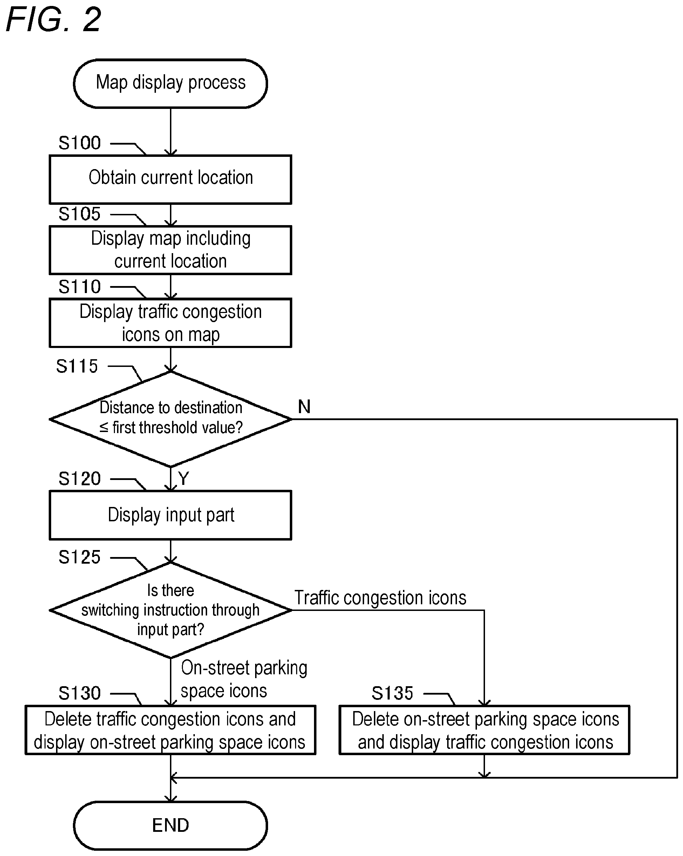

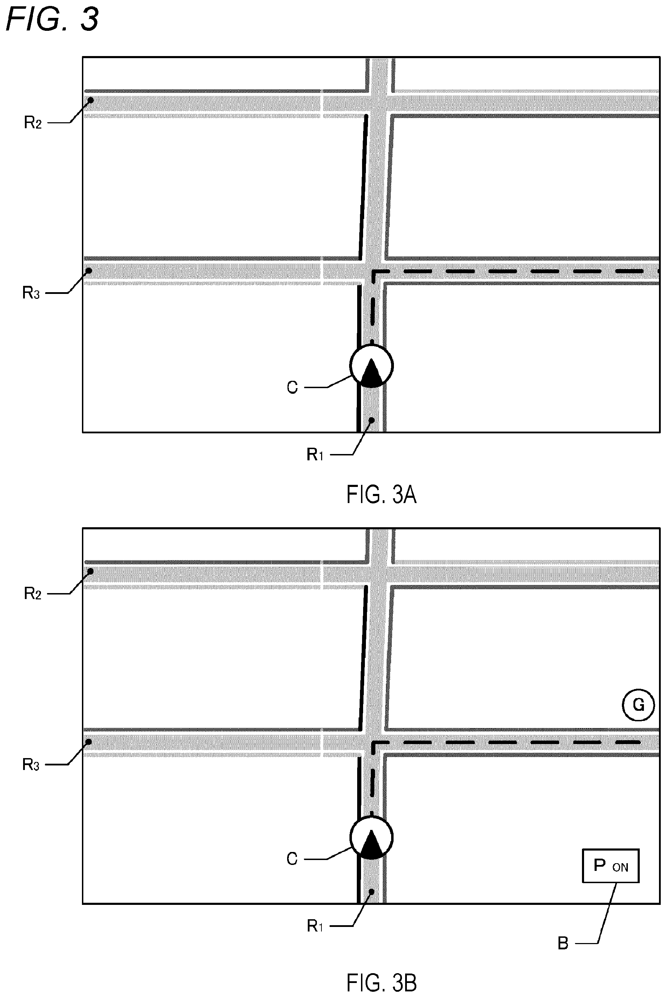

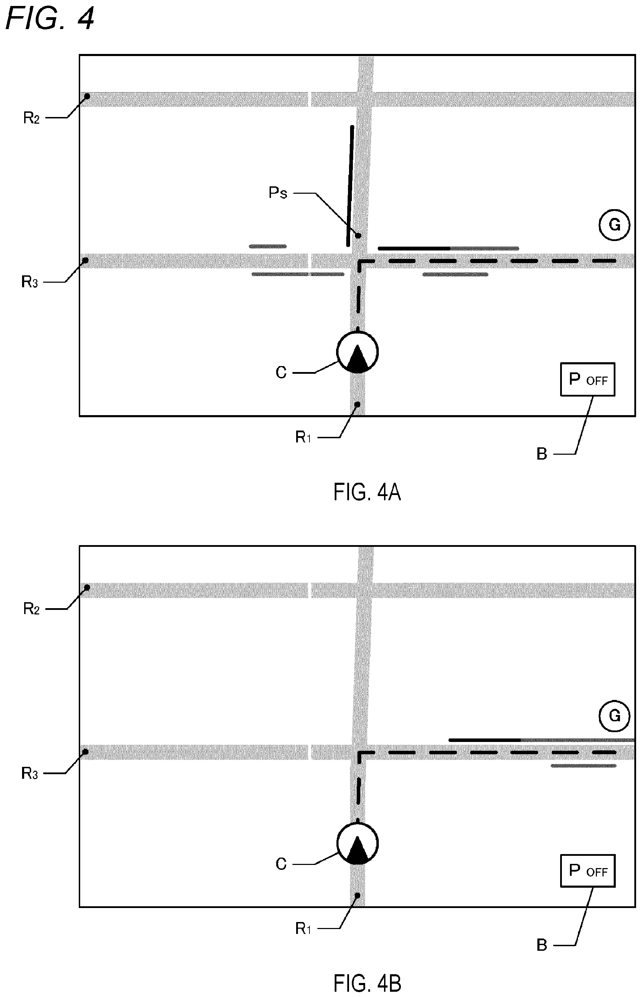

FIG. 2 is a flowchart of a map display process. FIGS. 3A, 3B, and 4A are diagrams showing exemplary display of a map. In the diagrams, roads R₁ to R₃ are represented by gray lines with a large width and a broken line on a road indicates a planned travel route. A current location of the vehicle is indicated by reference sign C. In addition, in the diagrams, a thin line displayed in parallel to a line indicating a road is a traffic congestion icon or an on-street parking space icon. In the present embodiment, these icons are displayed at locations off by the same distance from a road section, and also have the same display mode. Namely, both a traffic congestion icon and an on-street parking space icon are represented by thin lines shown additionally along a road, and the degrees of the icons (a traffic congestion level and an occupancy level) are indicated by coloring. In FIGS. 3A and 3B, coloring by red is schematically shown in black, coloring by orange is schematically shown in dark gray, and coloring by green is schematically shown in light gray. In addition, in FIG. 4A, coloring by blue is schematically shown in black and coloring by light blue is schematically shown in gray.

In the present embodiment, a map display process is performed every certain period (e.g., timing that is synchronized with rendering of a map on the display) during provision of route guidance. When a map display process starts, by the function of the current location obtaining part 21a, the control part 20 obtains a current location (step S100). Namely, the control part 20 obtains a current location of the vehicle based on output information from the GNSS receiving part 41, the vehicle speed sensor 42, and the gyro sensor 43.

Then, by the functions of the map information obtaining part 21c and the map display part 21d, the control part 20 displays a map including the current location (step S105). Namely, the control part 20 obtains, from the map information 30a, information for displaying a map on a predetermined scale on the display part of the user I/F part 45. Then, the control part 20 controls the display part of the user I/F part 45 to display a map of an area around the current location.

Then, by the function of the map display part 21d, the control part 20 displays traffic congestion icons on the map (step S110). Namely, the control part 20 performs communication with the information management system which is not shown through the communication part 44 to specify road sections included in the map displayed at step S105, and allow the information management system to transmit traffic congestion information of each road section. When the control part 20 receives the pieces of traffic congestion information, the control part 20 displays lines which are traffic congestion icons indicating the pieces of traffic congestion information such that the lines are associated with their corresponding road sections, and adds colors determined based on the traffic congestion level to the lines. As a result, for example, a map such as that shown in FIG. 3A is displayed on the display part. Note that in an example shown in FIG. 3A, a road is a two-way passable road, and by showing traffic congestion icons at the left and right of the road, traffic congestion levels for respective two travel directions are shown.

Then, by the function of the display control part 21e, the control part 20 determines whether the distance to a destination is less than or equal to the first threshold value (step S115). Namely, the control part 20 obtains a destination which is an endpoint of a planned travel route, and obtains a distance between the destination and the current location obtained at step S 100, based on the map information 30a. Furthermore, the control part 20 compares magnitudes of the distance and the predetermined first threshold value. If it is not determined at step S115 that the distance to the destination is less than or equal to the first threshold value, then the control part 20 ends the map display process.

If it is determined at step S115 that the distance to the destination is less than or equal to the first threshold value, then by the function of the display control part 21e, the control part 20 displays an input part (step S 120). Namely, the control part 20 controls the user I/F part 45 to display an input part together with the map. FIG. 3B shows an example in which a display part is displayed. A map in FIG. 3B shows the same area as that of a map shown in FIG. 3A, but in FIG. 3B, it is assumed that the distance from a current location C of the vehicle to a destination G is less than or equal to the first threshold value. Thus, in this case, at step S 120, an input part is displayed. In FIG. 3B, a button B is the input part. In the example shown in FIG. 3B, the characters "P_{ON}" indicate that the button B is a button for instructing to display on-street parking space icons.

Note that as described above, the map display process is performed every certain period, and when, at a stage of performing step S 120, a map display process has been performed in the past, a button B which is a display part may already be displayed. In this case, the control part 20 continues display of the currently displayed display part without newly displaying a display part.

At any rate, when step S 120 has been performed, by the function of the display control part 21e, the control part 20 determines whether a switching instruction has been provided through the input part (step S125). Namely, when a touch operation on the input part has been detected based on a signal outputted from the user I/F part 45, the control part 20 determines that a switching instruction has been provided through the input part. In addition, upon this determination, the control part 20 displays which type of icons, on-street parking space icons or traffic congestion icons, is to be displayed by the switching.

For example, in the example shown in FIG. 3B, the button B has the characters "P_{ON}" thereon, and is an input part for instructing to display on-street parking space icons. Thus, when the button B shown in FIG. 3B has been touched, the control part 20 determines that the type of icons to be displayed by switching is on-street parking space icons. In this case, by the function of the display control part 21e, the control part 20 deletes the traffic congestion icons and displays on-street parking space icons (step S130).

In this case, the control part 20 controls the display part of the user I/F part 45 to delete the traffic congestion icons and display on-street parking space icons, and to display the characters "P_{OFF}" on the button B which is the input part. FIG. 4A shows exemplary display for a case in which the button B has been touched in the example shown in FIG. 3B. Namely, in an example shown in FIG. 4A, on-street parking spaces present in an area in which the distance from a reference point Ps on a map being displayed is less than or equal to a second distance are represented by linear on-street parking space icons. When switching of the icons and the button such as that described above is performed, the control part 20 ends the map display process.

On the other hand, when a map display process is performed again with on-street parking space icons being displayed by performing step S130 as in the example shown in FIG. 4A and it is determined at step S125 that a switching instruction has been provided through the input part, the control part 20 determines that the type of icons to be displayed by the switching is traffic congestion icons. In this case, by the function of the display control part 21e, the control part 20 deletes the on-street parking space icons and displays traffic congestion icons (step S135). In this case, the control part 20 controls the display part of the user I/F part 45 to delete the on-street parking space icons and display traffic congestion icons, and to display the characters "P_{ON}" on the button B which is the input part. As a result, a screen is switched to the one such as that shown in FIG. 3B. According to the above-described configuration, the user can recognize the type of icons being displayed, based on the mode of the button B. Namely, the button B is a button for instructing to turn on or off on-street parking space icons. Thus, when the characters "ON" are displayed on the button B, the user can recognize that icons being displayed are traffic congestion icons. In addition, when the characters "OFF" are displayed on the button B, the user can recognize that icons being displayed are on-street parking space icons.

### (3) Other embodiments:

The above-described embodiment is an example for carrying out the present invention, and various other embodiments can also be adopted provided that when the vehicle approaches a destination with a map including traffic congestion icons being displayed, the traffic congestion icons are deleted and on-street parking space icons are displayed. For example, the map display system may be a device mounted on a vehicle, etc., or may be a device implemented by a portable terminal, or may be a system implemented by a plurality of devices (e.g., a client and a server). In addition, the map display system is applicable to any display system that is not related to a vehicle.

For a configuration in which at least one of the current location obtaining part 21a, the destination obtaining part 21b, the map information obtaining part 21c, the map display part 21d, and the display control part 21e that are included in the map display system is present divided into a plurality of devices, various configurations are assumed. For example, a configuration may be adopted in which a result of rendering a map, etc., are obtained by the navigation system making a request to a server through communication. Needless to say, some configurations of the above-described embodiment may be omitted or processing order may be changed or omitted.

The destination obtaining part may be configured in any manner as long as a destination of the vehicle can be obtained. Thus, the configuration is not limited to one in which a planned travel route is searched as in the above-described embodiment, and any configuration may be adopted as long as at least a destination is obtained regardless of whether or not to obtain a planned travel route.

The map display part displays, based on a current location and map information, a map including the current location on the display part. Upon the display, normally, traffic congestion icons indicating traffic congestion information of roads are displayed on the map. Needless to say, on the map there may be displayed other information, e.g., information indicating facilities or information indicating a destination. In addition, a map in a different mode than default may be displayed by a user's operation, etc. For example, a configuration may be adopted in which a map that does not include a current location is displayed by a user's scroll operation, etc.

The display control part may be configured in any manner as long as the display control part can delete traffic congestion icons and display, on a map, on-street parking space icons indicating parking spaces on streets, when the distance between a current location and a destination reaches less than or equal to the first threshold value. Namely, the display control part may be configured in any manner as long as the display control part can stop displaying traffic congestion icons and switch the display to display of on-street parking space icons, at a stage where the vehicle reaches an area around the destination and thus information indicating the locations of parking spaces becomes more important than information indicating traffic congestion.

The first threshold value may be any value for identifying that the vehicle approaches a destination and thus it is highly likely that the user wants to know information indicating the locations of parking spaces more than information on traffic congestion. Such a first threshold value is determined in advance, and for example, a distance of 2 km is set in advance. Needless to say, the first threshold value may be a fixed value, or may vary according to various conditions such as traffic congestion levels and the number of on-street parking spaces.

The second threshold value may be any value that defines an area in which the user searches for an on-street parking space from a map being displayed. Such a second threshold value is determined in advance, and for example, a distance of 500 m is set in advance. Needless to say, the second threshold value may be a fixed value, or may vary according to various conditions such as the occupancy levels of on-street parking spaces and the number of on-street parking spaces. In addition, although, in the above-described embodiment, the first threshold value is larger than the second threshold value, a mode in which the first threshold value is equal to the second threshold value or a mode in which the first threshold value is smaller than the second threshold value may be adopted. Furthermore, a reference for identifying on-street parking spaces which are display targets may be defined based on other elements. For example, on-street parking spaces present in an area with a predetermined distance from a current location of the vehicle may be display targets. In this case, the predetermined distance may be a distance along roads, or on-street parking spaces present within the predetermined distance in a specific area (e.g., a right-turn, straight-ahead, or left-turn area) of the vehicle may be display targets.

Furthermore, the reference for identifying on-street parking spaces which are display targets may be a destination. Namely, a configuration may be adopted in which on-street parking space icons displayed on a map are icons indicating parking spaces whose distances to the destination are less than or equal to a third threshold value. In this case, too, it is possible to adopt a configuration in which the first threshold value is larger than the third threshold value. This configuration can be implemented by the control part 20 identifying on-street parking spaces present in an area in which the distance from the destination is less than or equal to the third threshold value, and displaying the on-street parking spaces on the display part of the user I/F part 45 at step S130 of the above-described embodiment.

FIG. 4B is a diagram showing exemplary display after transitioning from FIG. 3B by an instruction provided on the button B in the above-described configuration. In this configuration, when the first threshold value is larger than the third threshold value, even if on-street parking space icons are displayed immediately after the distance between a current location of the vehicle and a destination reaches less than or equal to the first threshold value, on-street parking spaces around the current location of the vehicle are not display targets, but on-street parking spaces closer to the destination are display targets. Thus, the user can select, from a region around the destination, an on-street parking space where the vehicle is to be parked, with enough time before the vehicle approaches on-street parking spaces.

The third threshold value may be any value that defines an area that can be used, by the user that visits the destination, as a parking space where the vehicle is to be parked. Such a third threshold value is determined in advance, and for example, a distance of 500 m is set in advance. Needless to say, the third threshold value may be a fixed value, or may vary according to various conditions such as the occupancy levels of on-street parking spaces and the number of on-street parking spaces. In addition, a mode in which the first threshold value is equal to the third threshold value or a mode in which the first threshold value is smaller than the third threshold value may be adopted.

Note that, in the above-described embodiment, an input part is displayed on the display part and when an instruction is provided through the input part, deletion of traffic congestion icons and display of on-street parking space icons are performed, but the configuration is not limited thereto. For example, a configuration may be adopted in which an input part is not displayed and when the distance between a current location and a destination reaches less than or equal to the first threshold value, traffic congestion icons are deleted and on-street parking space icons indicating parking spaces on streets are displayed on a map.

Furthermore, elements for switching icons which are display targets from traffic congestion icons to on-street parking space icons may include other elements than an instruction provided through the display part and the distance between a current location and a destination. For example, the road type of a road section in which a current location is present may be an element. Specifically, the control part 20 identifies a road type of a road section in which a current location is present, by referring to the map information 30a. Then, it may be configured such that when the current location belongs to a road type having no on-street parking spaces, e.g., an expressway, even if the distance between the current location and the destination reaches less than or equal to the first threshold value, icons which are display targets are not switched to on-street parking space icons. In this case, when the current location reaches a road section of a road type having on-street parking spaces, e.g., a general road, and the distance between the current location and the destination is less than or equal to the first threshold value, the control part 20 switches icons which are display targets to on-street parking space icons. According to this configuration, on-street parking space icons are prevented from being displayed during traveling on a road having no on-street parking spaces, and display of traffic congestion icons can continue.

Furthermore, a technique in which as in the present invention, when the vehicle approaches a destination with a map including traffic congestion icons being displayed, the traffic congestion icons are deleted and on-street parking space icons are displayed is also applicable as a program or a method. In addition, it can be assumed that the system, the program, or the method such as that described above is implemented as a single device, or implemented by a plurality of devices, or implemented using a component shared with each part included in a vehicle, and includes various modes. For example, it is possible to provide a navigation system, a method, or a program that includes a device such as that described above. In addition, changes can be made as appropriate, e.g., a part is software and a part is hardware. Furthermore, the invention is also feasible as a recording medium for a program that controls the system. Needless to say, the recording medium for software may be a magnetic recording medium or may be a semiconductor memory, and any recording medium to be developed in the future can also be considered exactly in the same manner.

### REFERENCE SIGNS LIST

10: Navigation system, 20: Control part, 21: Map display program, 21a: Current location obtaining part, 21b: Destination obtaining part, 21c: Map information obtaining part, 21d: Map display part, 21e: Display control part, 30: Recording medium, 30a: Map information, 41: GNSS receiving part, 42: Vehicle speed sensor, 43: Gyro sensor, 44: Communication part, and 45: User I/F part

## Claims

1. A map display system comprising:
a current location obtaining part (21a) that obtains a current location of a vehicle;
a destination obtaining part (21b) that obtains a destination of the vehicle;
a map information obtaining part (21c) that obtains map information;
a map display part (21d) that displays, based on the current location and the map information, a map including the current location and a traffic congestion icon on a display part, the traffic congestion icon indicating traffic congestion information of a road; and
a display control part (21e),
**characterized in that**
the display control part (21e) performs deletion of the traffic congestion icon and display of an on-street parking space icon on the map, when a distance between the current location and the destination reaches less than or equal to a first threshold value, the on-street parking space icon indicating a parking space on a street,
when the distance between the current location and the destination reaches less than or equal to a first threshold value, the display control part (21e) displays, on the display part, an input part (B) for inputting an instruction to switch between the traffic congestion icon and the on-street parking space icon, and
the deletion of the traffic congestion icon and the display of the on-street parking space icon are performed when an instruction to switch the traffic congestion icon to the on-street parking space icon is provided through the input part (B).

2. The map display system according to claim 1, wherein
the on-street parking space icon displayed on the map is an icon indicating a parking space whose distance from a reference point on the map displayed on the display part is less than or equal to a second threshold value, and
the first threshold value is larger than the second threshold value.

3. The map display system according to claim 1, wherein
the on-street parking space icon displayed on the map is an icon indicating a parking space whose distance to the destination is less than or equal to a third threshold value, and
the first threshold value is larger than the third threshold value.

4. The map display system according to any one of claims 1 to 3, wherein the traffic congestion icon and the on-street parking space icon have a same form.

## Patentansprüche

1. Kartenanzeigesystem, das Folgendes umfasst:
ein Teil zur Ermittlung des aktuellen Standorts (21a), das den aktuellen Standort eines Fahrzeugs ermittelt;
ein Teil zur Ermittlung des Zielorts (21b), das einen Zielort des Fahrzeugs ermittelt;
ein Teil zur Ermittlung von Karteninformationen (21c), das Karteninformationen ermittelt;
ein Kartenanzeigeteil (21d), das auf der Grundlage des aktuellen Standorts und der Karteninformationen eine Karte mit dem aktuellen Standort und einem Verkehrsstausymbol auf einem Anzeigeteil anzeigt, wobei das Verkehrsstausymbol auf Verkehrsstauinformationen einer Straße hinweist; und
einen Anzeigesteuerungsteil (21e),
**dadurch gekennzeichnet, dass**
das Anzeigesteuerungsteil (21e) ein Löschen des Verkehrsstausymbols und eine Anzeige eines Symbols für einen Parkplatz an der Straße auf der Karte durchführt, wenn eine Entfernung zwischen dem aktuellen Standort und dem Zielort kleiner oder gleich einem ersten Schwellenwert ist, wobei das Symbol für einen Parkplatz an der Straße auf einen Parkplatz an einer Straße hinweist,
wenn die Entfernung zwischen dem aktuellen Standort und dem Zielort kleiner oder gleich einem ersten Schwellenwert ist, das Anzeigesteuerungsteil (21e) auf dem Anzeigeteil ein Eingabeteil (B) zum Eingeben einer Anweisung zum Umschalten zwischen dem Verkehrsstausymbol und dem Symbol für einen Parkplatz an der Straße anzeigt, und
das Löschen des Verkehrsstausymbols und das Anzeigen des Symbols für einen Parkplatz an der Straße werden ausgeführt, wenn über das Eingabeteil (B) eine Anweisung zum Umschalten vom Verkehrsstausymbol zum Symbol für einen Parkplatz an der Straße gegeben wird.

2. Kartenanzeigesystem gemäß Anspruch 1, wobei
das auf der Karte angezeigte Symbol für einen Parkplatz an der Straße ein Symbol ist, das auf einen Parkplatz hinweist, dessen Entfernung von einem Referenzpunkt auf der auf dem Anzeigeteil angezeigten Karte kleiner oder gleich einem zweiten Schwellenwert ist, und
der erste Schwellenwert größer ist als der zweite Schwellenwert.

3. Kartenanzeigesystem gemäß Anspruch 1, wobei
das auf der Karte angezeigte Symbol für einen Parkplatz an der Straße ein Symbol ist, das einen Parkplatz anzeigt, dessen Entfernung zum Zielort kleiner oder gleich einem dritten Schwellenwert ist, und
der erste Schwellenwert größer ist als der dritte Schwellenwert.

4. Kartenanzeigesystem gemäß einem der Ansprüche 1 bis 3, wobei das Verkehrsstausymbol und das Symbol für einen Parkplatz an der Straße eine gleiche Form haben.

## Revendications

1. Système d'affichage cartographique comprenant :
une partie d'obtention de la position actuelle (21a) qui obtient la position actuelle d'un véhicule ;
une partie d'obtention de la destination (21b) qui obtient la destination du véhicule ;
une partie d'obtention d'informations cartographiques (21c) qui obtient des informations cartographiques ;
une partie d'affichage cartographique (21d) qui affiche, sur la base de la position actuelle et des informations cartographiques, une carte comportant la position actuelle et une icône d'embouteillage sur une partie d'affichage, l'icône d'embouteillage indiquant des informations d'embouteillage d'une route ; et
une partie de commande d'affichage (21e),
**caractérisée en ce que**
la partie de commande d'affichage (21e) effectue une suppression de l'icône d'embouteillage et une affichage d'une icône d'espace de stationnement dans la rue sur la carte, lorsqu'une distance entre l'emplacement actuel et la destination atteint une valeur inférieure ou égale à une première valeur seuil, l'icône d'espace de stationnement dans la rue indiquant un espace de stationnement dans une rue,
lorsque la distance entre l'emplacement actuel et la destination atteint une valeur seuil inférieure ou égale à une première valeur seuil, la partie de commande d'affichage (21e) affiche, sur la partie d'affichage, une partie d'entrée (B) permettant de saisir une instruction pour basculer entre l'icône d'embouteillage et l'icône d'espace de stationnement dans la rue, et
la suppression de l'icône d'embouteillage et l'affichage de l'icône d'espace de stationnement dans la rue sont effectués lorsqu'une instruction pour passer de l'icône d'embouteillage à l'icône d'espace de stationnement dans la rue est fournie via la partie de saisie (B).

2. Système d'affichage cartographique selon la revendication 1, dans lequel
l'icône d'espace de stationnement dans la rue affichée sur la carte est une icône indiquant un espace de stationnement dont la distance par rapport à un point de référence sur la carte affichée sur la partie d'affichage est inférieure ou égale à une deuxième valeur seuil, et
la première valeur seuil est supérieure à la deuxième valeur seuil.

3. Système d'affichage cartographique selon la revendication 1, dans lequel
l'icône d'espace de stationnement dans la rue affichée sur la carte est une icône indiquant un espace de stationnement dont la distance par rapport à la destination est inférieure ou égale à une troisième valeur seuil, et
la première valeur seuil est supérieure à la troisième valeur seuil.

4. Système d'affichage cartographique selon l'une quelconque des revendications 1 à 3, dans lequel l'icône d'embouteillage et l'icône d'espace de stationnement dans la rue ont une même forme.
